# EUROPÄISCHE PATENTSCHRIFT

(11) **EP 0 514 737 B1**
(45) Veröffentlichungstag und Bekanntmachung des Hinweises auf die Patenterteilung: **28.02.1996**
(21) Anmeldenummer: 92107941.4
(22) Anmeldetag: 12.05.1992
(51) Int. Cl.: C08G 77/38

(54) **Verfahren zur Herstellung von Organopolysiloxanen mit mindestens einer an ein Si-Atom gebundenen Cyclopentadienylgruppe**
Method for making organopolysiloxanes with at least one Si-bound cyclopentadienyl-group
Procédé de production d'organopolysiloxanes avec au moins un groupe de cyclopentadienyle attaché à un atome de silicium

(30) Priorität: 24.05.1991 DE 4116987
(43) Veröffentlichungstag der Anmeldung: 25.11.1992
(73) Patentinhaber: Th. Goldschmidt AG, D-45127 Essen (DE)
(72) Erfinder: Klein, Klaus-Dieter, Dr., W-4330 Mülheim a.d. Ruhr (DE); Koerner, Götz, Dr., W-4300 Essen (DE); Knott, Wilfried, Dr., W-4300 Essen 1 (DE)

(56) Entgegenhaltungen:
- EP-A- 0 444 920
- EP-A- 0 444 921

## Beschreibung

Aus der Zeitschrift "Organometallics" 1983, 2, 1808 - 1814, ist es bekannt, 1,1,3,3-Tetramethyl-1,3-dichlorsiloxan mit Cyclopentadienylnatrium unter Verwendung von Ether als Lösungsmittel zu 1,1,3,3-Tetramethyl-1,3-bis(cyclopentadienyl)disiloxan umzusetzen.

Dieses Verfahren hat jedoch eine Reihe von Nachteilen, die eine generelle Anwendung des Verfahrens zur Herstellung von Organopolysiloxanen mit Cyclopentadienylgruppen nicht ermöglichen.

Ein Nachteil besteht darin, daß etherische Lösungen von Cyclopentadienylnatrium leicht entflammbar und hydrolyseempfindlich sind, was ihre Handhabung bei betrieblicher Arbeitsweise schwierig macht und aufwendige sicherheitstechnische Maßnahmen erfordert.

Ein weiterer Nachteil besteht darin, daß die Reaktion des Cyclopentadienylnatriums mit Si-Halogen-Gruppen exotherm verläuft und mit steigender Kettenlänge der Halogensiloxane neben den erwünschten in 5-Stellung an Si-Atome gebundenen Cyclopentadienylgruppen in steigendem Maße die 1- und 2-Isomeren gebildet werden.

Als zusätzlicher Nachteil ist die Abtrennung und Entsorgung überschüssigen Cyclopentadienylnatriums anzusehen.

Die Erfindung befaßt sich mit dem technischen Problem der Herstellung von Organopolysiloxanen mit mindestens einer an ein Si-Atom gebundenen Cyclopentadienylgruppe auf möglichst einfache, technisch leicht beherrschbare und reproduzierbare Weise. Dabei ist es erwünscht, daß das Verfahren zu Verbindungen führt, bei denen die Cyclopentadienylgruppe mit möglichst hohen Anteilen in 5-Stellung an ein Si-Atom des Organopolysiloxans gebunden ist.

Diese Forderungen werden durch das erfindungsgemäße Verfahren erfüllt. Es ist dadurch gekennzeichnet, daß man Halogenpolysiloxane mit, bezogen auf Si-Halogen-Gruppen, mindestens halbmolaren Mengen Dicyclopentadienylmagnesium in Gegenwart eines Ethers als Lösungsmittel umsetzt.

Als Ether sind zum Beispiel Diethylether, Tetrahydrofuran, 1,2-Dimethoxyethan und 1,2-Diethoxyethan geeignet. Besonders bevorzugt ist Tetrahydrofuran.

Die Halogenorganopolysiloxane können geradkettig oder verzweigt sein. Neben der oder den Halogengruppe(n) sind im allgemeinen an den Si-Atomen Alkylgruppen, insbesondere Methylgruppen, oder Arylgruppen, insbesondere Phenylgruppen, gebunden. Vorzugsweise sind jedoch mindestens 90 % der Organogruppen Methylgruppen. Es können jedoch auch weitere Gruppen vorhanden sein, soweit sie die erfindungsgemäße Umsetzung mit Dicyclopentadienylmagnesium nicht stören und unter den Bedingungen der Reaktion inert sind.

Besonders bevorzugt werden aus Gründen der Reproduzierbarkeit äquilibrierte Halogenpolysiloxane eingesetzt. Dabei eignen sich für das erfindungsgemäße Verfahren insbesondere solche äquilibrierten Halogensiloxane, bei deren Äquilibrierung als Katalysator Lewis-Säuren, wie FeCl₃, verwendet worden sind.

Aus Gründen der technischen Verfügbarkeit und der Reaktionsfähigkeit sind als Halogensiloxane Chlorsiloxane bevorzugt. Besonders bevorzugt sind α,ω-Halogensiloxane.

Beispiele für Halogensiloxane, welche bei dem erfindungsgemäßen Verfahren eingesetzt werden können, sind: 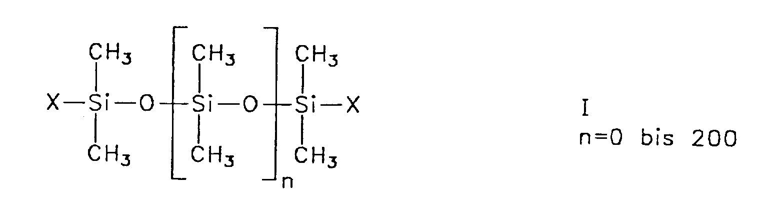 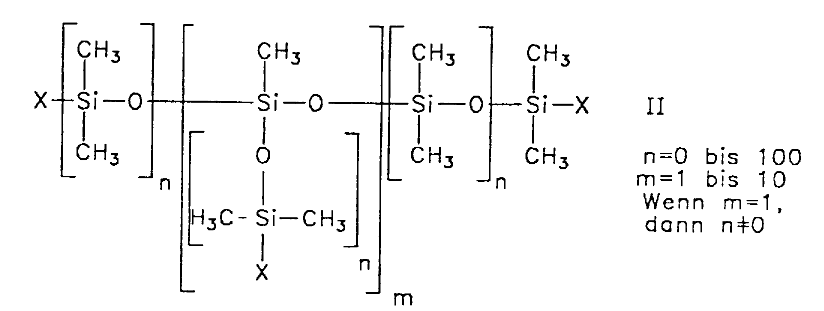 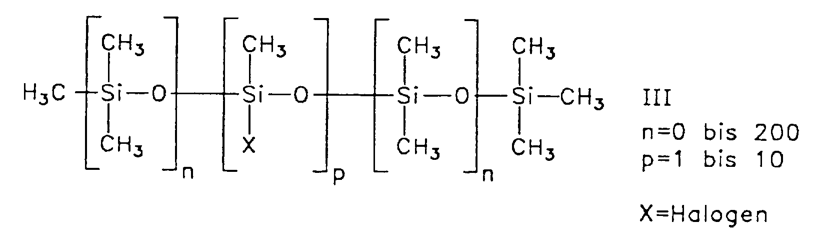 Das erfindungsgemäße Verfahren wird zur Vermeidung oder Verminderung der Bildung 1- und 2-stereoisomerer Verbindungen bei möglichst niedrigen Temperaturen durchgeführt. Vorzugsweise führt man die Umsetzung bei Temperaturen von ≤ 30°C, insbesondere ≤ 20°C, durch.

Die Reaktion verläuft nach folgendem Schema: 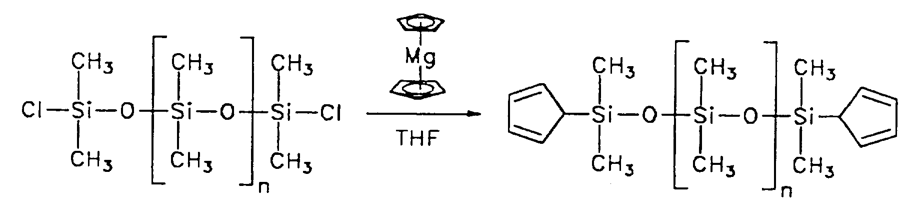 Mit dem erfindungsgemäßen Verfahren erhält man die gewünschten Cyclopentadienylsiloxane in Ausbeuten von 76 bis 82 %.

Die beim erfindungsgemäßen Verfahren erhältlichen Cyclopentadienylsiloxane können unmittelbar als Edukte für siloxanmodifizierte Übergangsmetallkatalysatoren eingesetzt werden. Sie sind darüber hinaus fähig, Diels-Alder-Reaktionen einzugehen und sind deshalb wertvolle Zwischenprodukte beispielsweise zur Herstellung von Siloxan-Polyimid-Copolymeren, die nach der Umsetzung der erfindungsgemäßen Verbindungen mit Maleinsäureanhydrid (Diels-Alder-Reaktion) mit Amin-Endgruppen aufweisenden Polyimiden erhalten werden können.

Das erfindungsgemäße Verfahren und die dabei erhaltenen Produkte sollen anhand der folgenden Beispiele noch näher erläutert werden.

### Beispiel 1

### 1,5-Dicyclopentadienylhexamethyltrisiloxan

45 g (0,16 Mol) 1,5-Dichlorhexamethyltrisiloxan werden in 50 ml absolutem Tetrahydrofuran gelöst und tropfenweise bei Raumtemperatur unter Schutzgasbedampfung (Argon) zu 160 ml einer 0,98 molaren Dicyclopentadienylmagnesiumlösung (24,7 g Cp₂Mg (0,16 Mol)) in Tetrahydrofuran gegeben, wobei sich die Mischung auf bis zu 45°C Innentemperatur erwärmt.

Man rührt noch einen Tag bei Raumtemperatur nach und versetzt anschließend die Reaktionsmischung vorsichtig mit gesättigter Ammoniumchloridlösung, was eine Temperaturerhöhung auf ca. 35°C zur Folge hat.

Dann überführt man die Mischung in einen Schütteltrichter, wäscht mit gesättigter Ammoniumchloridlösung bis zu Neutralreaktion und trennt die organische Phase ab. Die verbleibenden wäßrigen Phasen werden dann noch mehrmals mit Tetrahydrofuran extrahiert und die vereinigten organischen Phasen über wasserfreiem Natriumsulfat getrocknet, worauf das Lösungsmittel im Wasserstrahlvakuum entfernt wird. Der verbleibende Rückstand kann ohne weitere Bearbeitung zur Diels-Alder-Reaktion eingesetzt werden.

Nach dem Herstellungsverfahren und den Ergebnissen der NMR-Analyse war das Produkt 1,5-Dicyclopentadienylhexamethyltrisiloxan, das in 82 %iger Ausbeute entsteht.

### Beispiel 2

### α,ω-Dicyclopentadienylpolydimethylsiloxan

90,9 g α,ω-Dichlorpolydimethylsiloxan mit der mittleren Kettenlänge N = 9,2 und dem Säurewert SW = 2,72 Mol/kg werden langsam bei Raumtemperatur und unter Inertgasatmosphäre (Argon) zu 132,7 ml einer 0,96 molaren Lösung von Dicyclopentadienylmagnesium (20,06 g Cp₂Mg (0,13 Mol)) in Tetrahydrofuran gegeben. Dabei kommt es zu einer Erwärmung der Mischung auf 35 bis 45°C Innentemperatur.

Man rührt noch einen Tag bei Raumtemperatur nach und hydrolysiert die Reaktionsmischung mit gesättigter Ammoniumchloridlösung, was von einer Temperaturerhöhung auf ca. 35°C begleitet wird.

Die Mischung wird in einen Schütteltrichter überführt, mit gesättigter Ammoniumchloridlösung bis zur Neutralreaktion gewaschen, die organische Phase abgetrennt und die wäßrigen Phasen nochmals mit Tetrahydrofuran extrahiert. Die vereinigten organischen Phasen werden im Wasserstrahlvakuum vom Lösungsmittel befreit. Der verbleibende Rückstand kann ohne weitere Bearbeitung zur Diels-Alder-Reaktion eingesetzt werden.

Nach dem Herstellungsverfahren und den Ergebnissen der NMR-Analytik war das Produkt α,ω-Dicyclopentadienylpolydimethylsiloxan, das in 76 %iger Ausbeute erhalten wird.

### Darstellung einer 0,98 molaren Lösung von Dicyclopentadienylmagnesium in THF

Zu 24,3 g (1 Mol) Magnesiumpulver (270 mesh), suspendiert in 500 ml absolutem THF, werden unter Rühren und Argon-Schutzgasbedampfung 2,5 ml Titan(IV)chlorid gegeben (2,6 Mol-%). Nachdem die anfänglich gelbe Mischung eine schwarze Farbe angenommen hat (nach ca. 30 Minuten), können 82 ml (66 g = 1 Mol) frisch destilliertes Cyclopentadien tropfenweise hinzugefügt werden, wobei leichte Erwärmung festzustellen ist.

Nachdem 20 Stunden bei Raumtemperatur gründlich gerührt wurde, wird unter Schutzgasbedampfung über eine P4-Fritte überschüssiges Magnesiumpulver abfiltriert.

Man gewinnt 12,5 g (0,51 Mol) Magnesiumpulver zurück, das deutlich reaktiver als das Ausgangsmaterial ist und für weitere Ansätze verwendet werden kann.

Eine komplexometrische Magnesiumbestimmung (Mg⁺) des Filtrats belegt eine Ausbeute von 98 %.

Die so gewonnene 0,98 molare Lösung von Dicyclopentadienylmagnesium in THF kann ohne weitere Aufarbeitung für die beschriebenen Umsetzungen verwendet werden.

### Anwendungsbeispiel

### Reaktion von α,ω-Dicyclopentadienylpolymethylsiloxan mit Maleinsäureanhydrid

25 g (0,076 Mol) 1,5-Dicyclopentadienylhexamethyltrisiloxan werden mit 14,8 g (0,15 Mol) Maleinsäureanhydrid gemischt und unter Rühren auf 120°C erhitzt, wobei sich das Dienophil vollständig im Siloxan löst. Nach drei Stunden Reaktionszeit erhält man in praktisch quantitativer Ausbeute gemäß dem verwendeten Syntheseverfahren und den Ergebnissen der NMR-Analyse das entsprechende Diels-Alder-Produkt der Formel

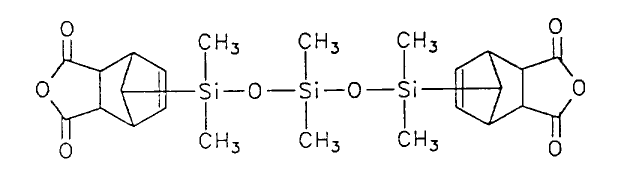

## Patentansprüche

1. Verfahren zur Herstellung von Organopolysiloxanen mit mindestens einer an ein Si-Atom gebundenen Cyclopentadienylgruppe, dadurch gekennzeichnet, daß man Halogenpolysiloxane mit, bezogen auf Si-Halogen-Gruppen, mindestens halbmolaren Mengen Dicyclopentadienylmagnesium in Gegenwart eines Ethers als Lösungsmittel umsetzt.

2. Verfahren nach Anspruch 1, dadurch gekennzeichnet, daß man als Ether Tetrahydrofuran verwendet.

3. Verfahren nach Anspruch 1 oder 2, dadurch gekennzeichnet, daß man als Halogenpolysiloxane Chlorpolysiloxane verwendet.

4. Verfahren nach einem oder mehreren der vorhergehenden Ansprüche, dadurch gekennzeichnet, daß man als Halogensiloxane α,ω-Halogensiloxane verwendet.

5. Verfahren nach einem oder mehreren der vorhergehenden Ansprüche, dadurch gekennzeichnet, daß man als Halogenpolysiloxane solche verwendet, die mit Lewis-Säuren äquilibriert worden sind.

6. Verfahren nach Anspruch 5, dadurch gekennzeichnet, daß man Halogenpolysiloxane verwendet, welche mit FeCl₃ äquilibriert worden sind.

7. Verfahren nach einem oder mehreren der vorhergehenden Ansprüche, dadurch gekennzeichnet, daß man die Umsetzung bei Temperaturen von ≤ 30°C, insbesondere ≤ 20°C, durchführt.

## Claims

1. Process for preparing organopolysiloxanes having at least one cyclopentadienyl group bonded to a silicon atom, characterized in that halopolysiloxanes are reacted with, based on silicon halide groups, at least half-molar amounts of dicyclopentadienylmagnesium in the presence of an ether as solvent.

2. Process according to Claim 1, characterized in that the ether used is tetrahydrofuran.

3. Process according to Claim 1 or 2, characterized in that the halopolysiloxanes used are chloropolysiloxanes.

4. Process according to one or more of the preceding claims, characterized in that the halosiloxanes used are α,ω-halosiloxanes.

5. Process according to one or more of the preceding claims, characterized in that the halopolysiloxanes used are ones which have been equilibrated using Lewis acids.

6. Process according to Claim 5, characterized in that the halopolysiloxanes used are ones which have been equilibrated using FeCl₃.

7. Process according to one or more of the preceding claims, characterized in that the reaction is carried out at temperatures of ≤ 30°C, in particular ≤ 20°C.

## Revendications

1. Procédé de préparation d'organopolysiloxanes avec au moins un groupe cyclopentadiényle lié à un atome de silicium, caractérisé en ce qu'on fait réagir des halogénopolysiloxanes avec du dicyclopentadiénylmagnésium en des quantités au moins semi-molaires par rapport aux groupes de Si-halogène, en présence d'un éther comme solvant.

2. Procédé selon la revendication 1, caractérisé en ce qu'on utilise, comme éther, le tétrahydrofuranne.

3. Procédé selon la revendication 1 ou 2, caractérisé en ce qu'on utilise, comme halogénopolysiloxanes, des chloropolysiloxanes.

4. Procédé selon une ou plusieurs des revendications précédentes, caractérisé en ce qu'on utilise, comme halogénosiloxanes, des α,ω-halogénosiloxanes.

5. Procédé selon une ou plusieurs des revendications précédentes, caractérisé en ce qu'on utilise des halogénopolysiloxanes qu'on a équilibrés avec des acides de Lewis.

6. Procédé selon la revendication 5, caractérisé en ce qu'on utilise des halogénopolysiloxanes qui ont été équilibrés avec Fecl₃.

7. Procédé selon une ou plusieurs des revendications précédentes, caractérisé en ce qu'on effectue la réaction à des températures ≤ 30°C, en particulier ≤ 20°C.
